# EUROPEAN PATENT APPLICATION

(11) **EP 4 669 003 A1**
(43) Date of publication of application: **24.12.2025**
(21) Application number: 23921908.2
(22) Date of filing: 16.02.2023
(51) Int. Cl.: H04W 74/00

(54) **RANDOM ACCESS METHOD AND APPARATUS**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2023/076612
(87) International publication number: WO 2024/168754

(57) **Abstract**

The present disclosure relates to the field of communication technology, and particularly, to a random access method and apparatus. Specifically, the present disclosure provides a method executed by a terminal device, comprising: receiving first instruction information sent by a first network device, wherein the first instruction information is configured for instructing the terminal device to switch to a target cell or a target cell group; determining, in response to the target cell or the target cell group being associated with a plurality of random access resource configuration identifiers, a specified one of the plurality of random access resource configuration identifiers as a target random access resource configuration identifier; and sending to the target cell or the target cell group a random access request on the basis of first configuration information associated with the target random access resource configuration identifier. The present disclosure ensures a consistent understanding of random access resources used in a random access process by the terminal device and the network device, improves the reliability of the random access process, provides conditions for the network device to more flexibly configure the random access resources, and improves the use efficiency of the random access resources.

## Description

### TECHNICAL FIELD

The disclosure relates to the field of communication technology, and in particular to a method and an apparatus for random access.

### BACKGROUND

In a conventional handover procedure, a random access resource is pre-configured for a terminal via a radio resource control (RRC) message. For a "dynamic cell (or cell group) change" procedure, when a "L1/L2 control signaling" controls the terminal to switch among a plurality of "candidate cells (or cell groups)", the "L1/L2 control signaling" may carry a random access resource of the target "cell (or cell group)".

### SUMMARY

Embodiments of the disclosure provide a method and an apparatus for random access, which ensure consistent understanding of a random access resource used in a random access procedure between a terminal and a network device, improve reliability of the random access procedure, and provide conditions for the network device to configure the random access resource more flexibly, thus improving utilization efficiency of the random access resource.

In a first aspect, embodiments of the disclosure provide a method for random access. The method is performed by a terminal, including: receiving first indication information sent by a first network device, in which the first indication information is configured to instruct the terminal to switch to a target cell or a target cell group; in response to the target cell or the target cell group being associated with a plurality of random access resource configuration identifiers, determining a specified random access resource configuration identifier among the plurality of random access resource configuration identifiers as a target random access resource configuration identifier; and sending, based on first configuration information associated with the target random access resource configuration identifier, a random access request to the target cell or the target cell group.

In a second aspect, embodiments of the disclosure provide a method for random access. The method is performed by a network device, including: sending first indication information to a terminal, in which the first indication information is configured to instruct the terminal to switch to a target cell or a target cell group; in response to the target cell or the target cell group being associated with a plurality of random access resource configuration identifiers, determining a specified random access resource configuration identifier among the plurality of random access resource configuration identifiers as a target random access resource configuration identifier; and receiving, based on first configuration information associated with the target random access resource configuration identifier, a random access request sent by the terminal.

In a third aspect, embodiments of the disclosure provide a communication device. The communication device has a function of realizing some or all of the functions of the terminal in the method described in the first aspect. For example, the functions of the communication device may have the functions in some or all embodiments in the disclosure, or may have a functions of implementing any one of the embodiments in the disclosure alone. The functions may be realized by hardware or by hardware executing corresponding software. The hardware or software includes one or more units or modules corresponding to the functions described above.

In an implementation, structures of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to receive first indication information sent by a first network device, in which the first indication information is configured to instruct a terminal to switch to a target cell or a target cell group; and a processing module, configured to, in response to the target cell or the target cell group being associated with a plurality of random access resource configuration identifiers, determine a specified random access resource configuration identifier among the plurality of random access resource configuration identifiers as a target random access resource configuration identifier, in which the transceiver module is further configured to send, based on first configuration information associated with the target random access resource configuration identifier, a random access request to the target cell or the target cell group.

In a fourth aspect, embodiments of the disclosure provide another communication device. The communication device has a function of realizing some or all of the functions of the network device in the method described in the second aspect. For example, the functions of the communication device may have the functions in some or all embodiments in the disclosure, or may have the functions of implementing any one of the embodiments in the disclosure alone. The functions may be realized by hardware or by hardware executing corresponding software. The hardware or software includes one or more units or modules corresponding to the functions described above.

In an implementation, structures of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to send first indication information to a terminal, in which the first indication information is configured to instruct the terminal to switch to a target cell or a target cell group; and a processing module, configured to, in response to the target cell or the target cell group being associated with a plurality of random access resource configuration identifiers, determining a specified random access resource configuration identifier among the plurality of random access resource configuration identifiers as a target random access resource configuration identifier, in which the transceiver module is further configured to receive, based on first configuration information associated with the target random access resource configuration identifier, a random access request sent by the terminal.

In a fifth aspect, embodiments of the disclosure provide a communication device. The communication device includes a processor. When the processor calls a computer program in a memory, the method according to the first aspect is performed.

In a sixth aspect, embodiments of the disclosure provide a communication device. The communication device includes a processor. When the processor calls a computer program in a memory, the method according to the second aspect is performed.

In a seventh aspect, embodiments of the disclosure provide a communication device. The communication device includes a processor and a memory. The memory is stored with a computer program; and the processor is configured to execute the computer program stored in the memory, so that the communication device performs the method according to the first aspect.

In an eighth aspect, embodiments of the disclosure provide a communication device. The communication device includes a processor and a memory. The memory is stored with a computer program; and the processor is configured to execute the computer program stored in the memory, so that the communication device performs the method according to the second aspect.

In a ninth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method according to the first aspect.

In a tenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method according to the second aspect.

In an eleventh aspect, embodiments of the disclosure provide a communication system. The system includes the communication device according to the third aspect and the communication device according to the fourth aspect, or the system includes the communication device according to the fifth aspect and the communication device according to the sixth aspect, or the system includes the communication device according to the seventh aspect and the communication device as described in the eighth aspect, or the system includes the communication device according to the ninth aspect and the communication device according to the tenth aspect.

In a twelfth aspect, embodiments of the disclosure provide a computer-readable storage medium. The computer-readable storage medium is configured to store instructions used by the terminal. When the instructions are executed, the terminal performs the method according to the first aspect.

In a thirteenth aspect, embodiments of the disclosure provide a computer-readable storage medium. The computer-readable storage medium is configured to store instructions used by the network device. When the instructions are executed, the network device performs the method according to the second aspect.

In a fourteenth aspect, embodiments of the disclosure provide a computer program product including a computer program. When the computer program is running on a computer, the computer is caused to perform the method according to the first aspect.

In a fifteenth aspect, embodiments of the disclosure provide a computer program product including a computer program. When the computer program is running on a computer, the computer is caused to perform the method according to the second aspect.

In a sixteenth aspect, embodiments of the disclosure provide a chip system. The chip system includes at least one processor and an interface, and is configured to support the terminal to perform functions involved in the first aspect, for example, to determine or process at least one of data and information involved in the above methods. In a possible design, the chip system further includes a memory. The memory is configured to save a necessary computer program and data for the terminal. The chip system may be constituted by a chip, or may include a chip and other discrete devices.

In a seventeenth aspect, embodiments of the disclosure provide a chip system. The chip system includes at least one processor and an interface, and is configured to support the network device to perform functions involved in the second aspect, for example, to determine or process at least one of data and information involved in the above methods. In a possible design, the chip system further includes a memory. The memory is configured to save a necessary computer program and data for the network device. The chip system may be constituted by a chip, or may include a chip and other discrete devices.

In an eighteenth aspect, embodiments of the disclosure provide a computer program. When the computer program is running on a computer, the computer is caused to perform the method according to the first aspect.

In a nineteenth aspect, embodiments of the disclosure provide a computer program. When the computer program is running on a computer, the computer is caused to perform the method according to the second aspect.

### BRIEF DESCRIPTION OF THE DRAWINGS

In order to explain technical solutions in the embodiments of the disclosure or the related art more clearly, the drawings described in the embodiments of the disclosure or required in the related art will be briefly introduced below.
FIG. 1 is a diagram illustrating an architecture of a communication system according to an embodiment of the disclosure.
FIG. 2 is a flow chart illustrating a method for random access according to an embodiment of the disclosure.
FIG. 3 is a flow chart illustrating a method for random access according to an embodiment of the disclosure.
FIG. 4 is a flow chart illustrating a method for random access according to an embodiment of the disclosure.
FIG. 5 is a flow chart illustrating a method for random access according to an embodiment of the disclosure.
FIG. 6 is a flow chart illustrating a method for random access according to an embodiment of the disclosure.
FIG. 7 is an interaction diagram illustrating a method for random access according to an embodiment of the disclosure.
FIG. 8 is a block diagram illustrating a communication device according to an embodiment of the disclosure.
FIG. 9 is a block diagram illustrating a communication device according to an embodiment of the disclosure.
FIG. 10 is a block diagram illustrating a chip according to an embodiment of the disclosure.

### DETAILED DESCRIPTION

To facilitate understanding of technical solutions of the disclosure, some terms involved in embodiments of the disclosure are briefly described below.

### 1. L1/L2 control signaling.

The L1/L2 control signaling indicates that corresponding information partially comes from a physical layer (layer 1, such as downlink control information (DCI)) and partially comes from a media access control (MAC) layer (layer 2).

### 2. Candidate cell (or cell group).

In a related communication system, a network device may provide a terminal with a plurality of "candidate cells (or cell groups)". Subsequently, the network device may control, via the L1/L2 control signaling, the terminal to switch among the plurality of "candidate cells (or cell groups)" (for example, changing a serving cell (or cell group) from "candidate cell (or cell group)-1" to "candidate cell (or cell group)-2").

In this case, one serving cell (or cell group) may correspond to one or a plurality of "candidate cells (or cell groups)".

This procedure may also be referred to as an L1/L2-triggered mobility (LTM) procedure.

### 3. Target cell or cell group.

When the network device instructs the terminal to perform cell or cell group change, it is the cell or the cell group to be accessed.

### 4. Random access procedure (or random access channel, RACH)

When the terminal accesses a target cell, the terminal may initiate a random access procedure.

According to "a number of steps in the random access procedure", the random access procedure may be classified into: a 4-step random access procedure (4-step RACH) or a 2-step random access procedure (2-step RACH).

In addition, according to "whether the random access resource used in the random access procedure is shared", the random access procedure may be classified into: a contention-based random access procedure (CBRA, contention-based RACH), that is, the random access signal resource sent by the terminal is shared by a plurality of terminals; or a contention-free random access procedure (CFRA, contention-free RACH), that is, the random access signal resource sent by the terminal is exclusive to the terminal.

In order to better understand the method and apparatus for random access in embodiments of the disclosure, a communication system to which embodiments of the disclosure are applicable is described below.

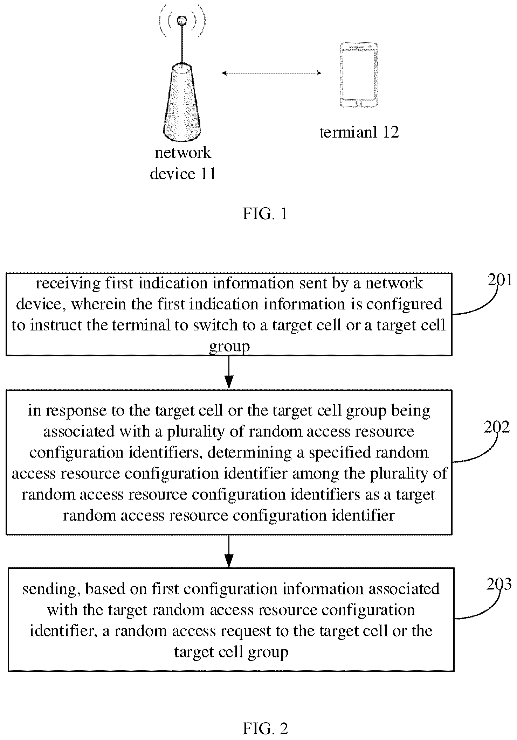

FIG. 1 is a diagram illustrating an architecture of a communication system according to an embodiment of the disclosure. The communication system may include, but is not limited to, one network device and one terminal. The number and forms of the devices illustrated in FIG. 1 are only for example and do not constitute a limitation to embodiments of the disclosure, and two or more network devices and two or more terminals may be included in practical applications. The communication system as illustrated in FIG. 1 includes one network device 11 and one terminal 12 for example.

It should to be noted that the technical solution in embodiments of the disclosure is applicable to various communication systems, such as a long term evolution (LTE) system, a 5th generation (5G) mobile communication system, a 5G new radio (NR) system or other future new mobile communication systems.

The network device 11 in embodiments of the disclosure is an entity on a network side for transmitting or receiving signals, and is a device for communicating with a terminal. The network device 11 may be a base transceiver station (BTS) in a global system for mobile communications (GSM) system or a code division multiple access (CDMA) system, may be a nodeB (NB) in a wideband code division multiple access (WCDMA) system, may be an evolved nodeB (eNB or eNodeB) in a LTE system, may be a radio controller in a cloud radio access network (CRAN) scenario, may be a radio network controller (RNC), a base station controller (BSC), a home base station (for example, a home evolved nodeB (HeNB) or a home nodeB (HNB)), or a baseband unit (BBU), or the network device may be a relay station, an access point, an in-vehicle device, a wearable device, a network device in a 5G network, or a network device in a future evolved public land mobile network (PLMN), may be an access point (AP) in a wireless local area network (WLAN), a wireless relay node, a wireless backhaul node, a transmission point (TP), or a transmission and reception point (TRP), may be a gNB or a transmission point (TRP or TP) in a new radio (NR) system, or may be one or one group (including multiple antenna panels) of antenna panels of a base station in a 5G system, or may be a network node constituting a gNB or a transmission point, such as a baseband unit (BBU) or a distributed unit (DU). A specific technology and a specific device form adopted by the network device are not limited in embodiments of the disclosure. The network device provided in embodiments of the disclosure may consist of a central unit (CU) and DUs. The CU may also be referred to as a control unit. The network device, such as protocol layers of the network device may be split by using a structure of the CU-DU, so that the functions for a part of the protocol layers are placed in the CU for centralized control, and functions of a remaining part or all of the protocol layers are distributed in the DUs, and the DUs are centrally controlled by the CU.

The terminal 12 in embodiments of the disclosure may be a device providing voice/data connectivity to users, such as a handheld device with wireless connection capability, an in-vehicle device, and so on. Examples of some terminals include: a mobile phone, a tablet computer, a laptop computer, a palmtop computer, a mobile internet device (MID), a wearable device, a virtual reality (VR) device, a augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device with a wireless communication function, a computing device or other processing devices connected to a wireless modem, an in-vehicle device, a wearable device, a terminal in a 5G network, or a terminal in a future evolved public land mobile network (PLMN), and/or any other suitable device for communication on a wireless communication system, which is not limited in embodiments of the disclosure.

A wearable device may also be called a wearable smart device, which is a general term for devices designed intelligently by applying wearable technology to daily wearable devices, such as glasses, gloves, watches, clothing, and shoes. The wearable device is a portable device that can be worn directly on the body or integrated into user clothes or accessories. The wearable device is not only a hardware device but also implements powerful functions through software support, data interaction, and cloud interaction. Wearable smart devices in a broad sense include full-featured, large-sized devices that may implement complete or partial functions without relying on a smartphone, such as a smart watch or smart glasses, and devices focusing only on a specific type of application function that need to cooperate with other devices such as a smartphone, such as various smart bracelets or smart jewelry for physical sign monitoring.

In addition, in embodiments of the disclosure, the terminal may also be a terminal in an internet of things (IoT) system. The IoT is an important part of future information technology development, and its main technical feature is connecting items through communication technology and networks, thus realizing an intelligent network of human-machine interconnection and thing-to-thing interconnection.

In addition, in embodiments of the disclosure, the terminal may also include an intelligent printer, train detector, gas station sensor, and so on, whose main functions include collecting data (for some terminals), receiving control information and downlink data from a network device, sending electromagnetic waves, and transmitting uplink data to the network device.

It should be noted that the technical solutions of embodiments of the disclosure may be applied to various communication systems, such as the LTE system, the 5G mobile communication system, the 5G NR system, or other future new mobile communication systems.

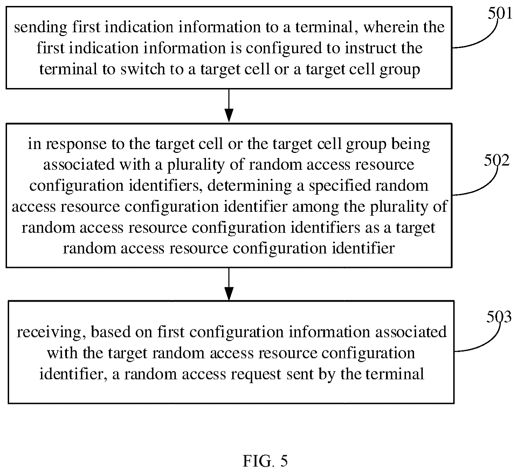

The terminal 12 provided in embodiments of the disclosure may perform the method shown in the embodiments of FIG. 2 to FIG. 4, and the network device 11 may perform the method shown in the embodiments of FIG. 5 to FIG. 6.

It may be understood that the communication system described in embodiments of the disclosure is intended to explain technical solutions of embodiments of the disclosure more clearly, and does not constitute a limitation to the technical solutions provided by embodiments of the disclosure. Those skilled in the art may know that, with evolution of a system architecture and emergence of a new service scenario, the technical solutions provided in embodiments of the disclosure are capable to be applied to similar technical problems.

In addition, the following points are explained to facilitate understanding of the embodiments of the disclosure.

First, in the disclosure, terms such as "first", "second", and various numerical labels are used only for distinguishing descriptions and do not limit the scope of the embodiments of the disclosure. For example, they are used to distinguish different information or different terminals.

Second, "protocol" referred to in the embodiments of the disclosure may mean standard specification in the field of communications, for example, including LTE protocols, NR protocols, and related protocols applied in future communication systems, which is not limited in the disclosure.

Third, embodiments of the disclosure enumerate a plurality of implementations to provide a clear illustration of the technical solutions of embodiments of the disclosure. Those skilled in the art may understand that the plurality of embodiments provided in the embodiments of the disclosure may be performed individually, may be performed in combination with the methods of other embodiments in the embodiments of the disclosure, and may be performed individually or in combination with a number of other methods in the related art. The embodiments of the disclosure do not limit this.

In embodiments of the disclosure, for the same cell or the same cell group, in a case that both an RRC message and a L1/L2 control signaling carry a random access resource associated with the same cell or cell group, a method and an apparatus for random access is provided. For the same cell or the same cell group, if random access resource configuration identifiers associated with the cell or the cell group determined by the terminal and the network device determine are inconsistent, a specified random access resource configuration identifier is determined as a target random access resource configuration identifier associated with the cell or the cell group, thus ensuring consistent understanding between the terminal and the network device regarding using which random access resources for the cell or the cell group, and improving reliability of the random access procedure.

The method and apparatus for random access provided in the disclosure are further described in combination with accompany drawings.

Referring to FIG. 2. FIG. 2 is a flow chart illustrating a method for random access according to an embodiment of the disclosure. As shown in FIG. 2, the method is performed by a terminal and may include but is not limited to the following steps 201 to 203.

At step 201, first indication information sent by a network device is received, in which the first indication information is configured to instruct the terminal to switch to a target cell or a target cell group.

In some possible implementations, the first indication information may include a "L1/L2 control signaling".

In some possible implementations, the first indication information may include an identifier of a target cell or an identifier of a target cell group.

At step 202, in response to the target cell or the target cell group being associated with a plurality of random access resource configuration identifiers, a specified random access resource configuration identifier among the plurality of random access resource configuration identifiers is determined as a target random access resource configuration identifier.

The random access resource configuration identifier may be used to uniquely determine configuration information of a random access resource used by the terminal in a random access procedure.

In some possible implementations, the configuration information of the random access resource may include a position of a time-frequency domain resource used in the random access procedure, such as a physical random access channel (PRACH) occasion.

In some possible implementations, the random access resource configuration identifier may further include an identifier for indicating whether the resource used in the random access procedure is a shared resource. For example, if the random access resource configuration identifier includes a contention-free random access resource configuration identifier, such as a random access preamble, the identifier indicates that the random access resource is a non-shared resource exclusive to the terminal; or, if the random access resource configuration identifier includes a contention-based random access resource configuration identifier, the identifier indicates that the random access resource is shared by a plurality of terminals, and so on, which is not limited in the disclosure.

In some possible implementations, if the target cell or the target cell group is associated with a plurality of random access resource configuration identifiers, for example, the first indication information includes a first random access resource configuration identifier, and the network device, when configuring a candidate cell or a candidate cell group for the terminal, also configures a random access resource configuration identifier associated with the target cell or the target cell group, the terminal may determine a specified one as the target random access resource configuration identifier associated with the target cell or the target cell group.

In some possible implementations, the terminal may determine the specified random access resource configuration identifier among the plurality of random access resource configuration identifiers based on a protocol agreement; or the terminal may determine the specified random access resource configuration identifier among the plurality of random access resource configuration identifiers based on an indication of the network device.

In some possible implementations, the terminal may determine a first random access resource configuration identifier included in the first indication information as the target random access resource configuration identifier.

For example, the first indication information includes random access resource configuration #1, and the random access resource configuration identifier associated with the target cell or the target cell group in the candidate cell or the candidate cell group configuration received by the terminal is random access resource configuration #2, then the terminal may determine the random access resource configuration #1 as the target random access resource configuration identifier.

In some possible implementations, the terminal may determine a random access resource configuration identifier with a minimum time interval between a reception time point and a current time point as the target random access resource configuration identifier.

For example, there are two random access resource configuration identifiers associated with the target cell or the target cell group, which are the random access resource configuration #1 and the random access resource configuration #2, and a time interval between a reception time point of random access resource configuration #1 and the current time point is Δt1, and a time interval between a reception time point of random access resource configuration #2 and the current time point is Δt2, and Δt1 < Δt2, then the terminal may determine the random access resource configuration #1 as the target random access resource configuration identifier.

In some possible implementations, in response to the target cell or the target cell group being associated with only one random access resource configuration identifier, that is, when the first indication information does not include a random access resource configuration identifier, the one random access resource configuration identifier is determined as the target random access resource configuration identifier.

At step 203, based on first configuration information associated with the target random access resource configuration identifier, a random access request is sent to the target cell or the target cell group.

After determining the target random access resource configuration identifier, the terminal may determine, based on the first configuration information associated with the target random access resource configuration identifier, the random access resource used in the random access procedure, such as a time-frequency position of the random access resource and whether the random access resource is a shared resource, and then send the random access request to the target cell or the target cell group based on the determined random access resource.

In some possible implementations, if the target cell or the target cell group is still within coverage of the network device, the terminal may send the random access request to the network device.

In some possible implementations, if the target cell or the target cell group is no longer within coverage of the network device, the terminal may send the random access request to a new network device to which the target cell or the target cell group belongs.

By implementing the embodiments of the disclosure, after receiving the first indication information instructing the terminal to access the target cell or the target cell group, if the target cell or the target cell group is associated with the plurality of random access resource configuration identifiers, the terminal may specify one of the random access resource configuration identifiers as the target random access resource configuration identifier, and then send the random access request to the target cell or the target cell group based on the first configuration information associated with the target random access resource configuration identifier. Thus, consistent understanding of using which random access resources for the cell or the cell group between the terminal and the network device is ensured, reliability of the random access procedure is improved, conditions are provided for the network device to configure random access resources more flexibly, and utilization efficiency of the random access resources is improved.

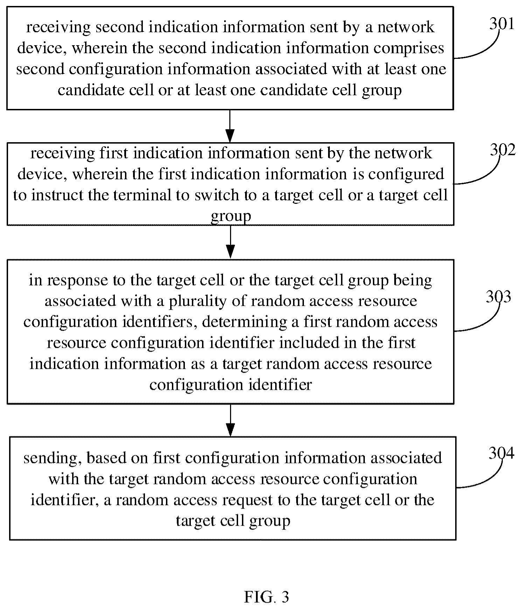

Referring to FIG. 3. FIG. 3 is a flow chart illustrating a method for random access according to an embodiment of the disclosure. As shown in FIG. 3, the method is performed by a terminal and may include but is not limited to the following steps 301 to 304.

At step 301, second indication information sent by a network device is received, in which the second indication information includes second configuration information associated with at least one candidate cell or at least one candidate cell group.

In some possible implementations, the second indication information may be an RRC message.

In some possible implementations, the second configuration information includes at least one of: a number of steps in a random access procedure, or whether a random access resource is shared.

In some possible implementations, the number of steps in the random access procedure may be 2 or 4.

The terminal may classify the random access procedure into: a 4-step random access procedure or a 2-step random access procedure based on the number of steps.

In some possible implementations, based on "whether the random access resource is shared", the random access procedure may be classified into: a CBRA, or a CFRA.

In some possible implementations, whether the random access resource is shared is configured as a contention-free random access resource configuration identifier, and third configuration information associated with the contention-free random access resource configuration identifier includes at least one of: a time-frequency position of the random access resource, or a random access resource code.

In some possible implementations, the random access resource code is a random access preamble.

In some possible implementations, the second indication information further includes third indication information for indicating whether the first indication information carries the random access resource configuration identifier.

That is, an indication field for indicating whether the L1/L2 control signaling carries the random access resource configuration identifier is carried in the RRC message, so that after receiving the RRC message, the terminal may determine a format of the first indication information based on the third indication information, and then when receiving the first indication information, the terminal may parse the first indication information based on the determined format.

At step 302, first indication information sent by the network device is received, in which the first indication information is configured to instruct the terminal to switch to a target cell or a target cell group.

At step 303, in response to the target cell or the target cell group being associated with a plurality of random access resource configuration identifiers, a first random access resource configuration identifier included in the first indication information is determined as a target random access resource configuration identifier.

In some possible implementations, the terminal may determine a random access resource configuration identifier with a minimum time interval between a reception time point and a current time point as the target random access resource configuration identifier.

At step 304, based on first configuration information associated with the target random access resource configuration identifier, a random access request is sent to the target cell or the target cell group.

For specific implementation forms of steps 302 to 304 reference may be made to the detailed descriptions in other embodiments of the disclosure, and details are not repeated here.

By implementing the embodiments of the disclosure, the terminal first receives the second configuration information associated with candidate cells or candidate cell groups sent by the network device. After receiving the first indication information instructing the terminal to access the target cell or the target cell group, if the target cell or the target cell group is associated with the plurality of random access resource configuration identifiers, the terminal may determine the specified random access resource configuration identifier as the target random access resource configuration identifier, and then send the random access request to the target cell or the target cell group based on the first configuration information associated with the target random access resource configuration identifier. Thus, consistent understanding of using which random access resource for the cell or the cell group is ensured between the terminal and the network device, reliability of the random access procedure is improved, conditions are provided for the network device to configure random access resources more flexibly, and utilization efficiency of the random access resources is improved.

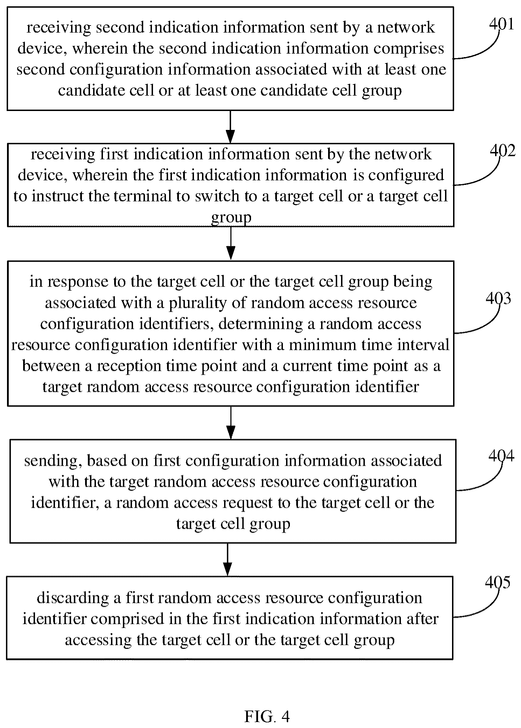

Referring to FIG. 4. FIG. 4 is a flow chart illustrating a method for random access according to an embodiment of the disclosure. As shown in FIG. 4, the method is performed by a terminal and may include but is not limited to the following steps 401 to 405.

At step 401, second indication information sent by a network device is received, in which the second indication information includes second configuration information associated with at least one candidate cell or at least one candidate cell group.

At step 402, first indication information sent by the network device is received, in which the first indication information is configured to instruct the terminal to switch to a target cell or a target cell group.

At step 403, in response to the target cell or the target cell group being associated with a plurality of random access resource configuration identifiers, a random access resource configuration identifier with a minimum time interval between a reception time point and a current time point is determined as a target random access resource configuration identifier.

In some possible implementations, the terminal may determine a first random access resource configuration identifier included in the first indication information as the target random access resource configuration identifier

At step 404, based on first configuration information associated with the target random access resource configuration identifier, a random access request is sent to the target cell or the target cell group.

For specific implementation forms of steps 401 to 404 reference may be made to the detailed descriptions in other embodiments of the disclosure, and details are not repeated here.

At step 405, a first random access resource configuration identifier included in the first indication information is discarded after accessing the target cell or the target cell group.

That is, the first random access resource configuration identifier indicated in the first indication information is valid only for the current access to the target cell or the target cell group. In subsequent random access procedures, if the terminal needs to access the target cell or the target cell group again, a new target random access resource configuration identifier may be determined based on new indication information sent by the network device and/or a random access resource configuration identifier indicated in the second indication information. Thus, conditions are provided for the network device to configure random access resources more flexibly, and utilization efficiency of the random access resources is improved.

By implementing the embodiments of the disclosure, the terminal first receives the second configuration information associated with candidate cells or candidate cell groups sent by the network device. After receiving the first indication information instructing the terminal to access the target cell or the target cell group, if the target cell or the target cell group is associated with the plurality of random access resource configuration identifiers, the terminal may determine the specified random access resource configuration identifier as the target random access resource configuration identifier, and then send the random access request to the target cell or the target cell group based on the first configuration information associated with the target random access resource configuration identifier, and discard the first random access resource configuration identifier included in the first indication information after accessing the target cell or the target cell group. Thus, consistent understanding of using which random access resources for the cell or the cell group is further ensured between the terminal and the network device, reliability of the random access procedure is improved, conditions are provided for the network device to configure random access resources more flexibly, and utilization efficiency of the random access resources is improved.

Referring to FIG. 5. FIG. 5 is a flow chart illustrating a method for random access according to an embodiment of the disclosure. As shown in FIG. 5, the method is performed by a network device and may include but is not limited to the following steps 501 to 503.

At step 501, first indication information is sent to a terminal, in which the first indication information is configured to instruct the terminal to switch to a target cell or a target cell group.

In some possible implementations, the first indication information may include a "L1/L2 control signaling".

In some possible implementations, the first indication information may include an identifier of a target cell or an identifier of a target cell group.

In some possible implementations, when determining that the terminal needs to switch to a target cell or a target cell group, the network device may send the first indication information to the terminal, instructing the terminal to switch to the target cell or the target cell group.

In some possible implementations, the network device may receive a cell handover indication sent by another network device, in which the handover indication includes an identifier of the terminal and an identifier of the target cell or the target cell group.

At step 502, in response to the target cell or the target cell group being associated with a plurality of random access resource configuration identifiers, a specified random access resource configuration identifier among the plurality of random access resource configuration identifiers is determined as a target random access resource configuration identifier.

The random access resource configuration identifier may be used to uniquely determine configuration information of a random access resource used by the terminal in a random access procedure.

In some possible implementations, the configuration information of the random access resource may include a position of a time-frequency domain resource used in the random access procedure, such as a PRACH occasion.

In some possible implementations, the random access resource configuration identifier may further include an identifier for indicating whether the resource used in the random access procedure is a shared resource. For example, if the random access resource configuration identifier includes a contention-free random access resource configuration identifier, such as a random access preamble, the identifier indicates that the random access resource is a non-shared resource exclusive to the terminal; or, if the random access resource configuration identifier includes a contention-based random access resource configuration identifier, the identifier indicates that the random access resource is shared by a plurality of terminals, and so on, which is not limited in the disclosure.

In some possible implementations, if the target cell or the target cell group is associated with a plurality of random access resource configuration identifiers, for example, the first indication information includes a first random access resource configuration identifier, and the network device, when configuring a candidate cell or a candidate cell group for the terminal, also configures a random access resource configuration identifier associated with the target cell or the target cell group, the network device may determine a specified one as the target random access resource configuration identifier associated with the target cell or the target cell group.

In some possible implementations, the network device may determine a specified random access resource configuration identifier among the plurality of random access resource configuration identifiers based on a protocol agreement.

Alternatively, the network device may, based on a configured rule, determine a specified random access resource configuration identifier among the plurality of random access resource configuration identifiers, and indicate the configured rule to the terminal.

In some possible implementations, the network device may determine a first random access resource configuration identifier included in the first indication information as the target random access resource configuration identifier.

For example, the first indication information includes random access resource configuration #1, and the random access resource configuration identifier associated with the target cell or the target cell group in the candidate cell or the candidate cell group configuration configured by the network device for the terminal is random access resource configuration #2, then the terminal may determine the random access resource configuration #1 as the target random access resource configuration identifier.

In some possible implementations, the network device may determine a random access resource configuration identifier with a minimum time interval between a sending time point and a current time point as the target random access resource configuration identifier.

For example, there are two random access resource configuration identifiers associated with the target cell or the target cell group, which are the random access resource configuration #1 and the random access resource configuration #2, and a time interval between a sending time point of random access resource configuration #1 and the current time point is Δt1, and the a interval between a sending time point of random access resource configuration #2 and the current time point is Δt2, and Δt1 < Δt2, then the network device may determine the random access resource configuration #1 as the target random access resource configuration identifier.

In some possible implementations, in response to the target cell or the target cell group being associated with only one random access resource configuration identifier, that is, when the first indication information does not include a random access resource configuration identifier, the one random access resource configuration identifier is determined as the target random access resource configuration identifier.

At step 503, based on first configuration information associated with the target random access resource configuration identifier, a random access request sent by the terminal is received.

After determining the target random access resource configuration identifier, the network device may determine, based on the first configuration information associated with the target random access resource configuration identifier, the random access resource used by the terminal in the random access procedure, such as a time-frequency position of the random access resource and whether the random access resource is shared, then, based on the determined random access resource, receive the random access request sent by the terminal, thus ensuring that the network device may reliably receive the random access request sent by the terminal.

In some possible implementations, the target cell or the target cell group may be located within coverage of the network device. In this case, the network device may, based on the determined first configuration information, monitor the random access request sent by the terminal.

In some possible implementations, the target cell or the target cell group may be located out of the coverage of the network device. In this case, the network device may send the determined first configuration information to another network device covering the target cell or the target cell group, so that the other network device may reliably monitor, based on the first configuration information, the random access request sent by the terminal.

By implementing the embodiments of the disclosure, the network device first sends the first indication information instructing the terminal to access the target cell or the target cell group to the terminal. After determining the target cell or the target cell group is associated with the plurality of random access resource configuration identifiers, the network device may specify one of the random access resource configuration identifiers as the target random access resource configuration identifier, and then receive the random access request sent by the terminal based on the first configuration information associated with the target random access resource configuration identifier. Thus, consistent understanding of using which random access resources for the cell or the cell group is ensured between the terminal and the network device, reliability of the random access procedure is improved, conditions are provided for the network device to configure random access resources more flexibly, and utilization efficiency of the random access resources is improved.

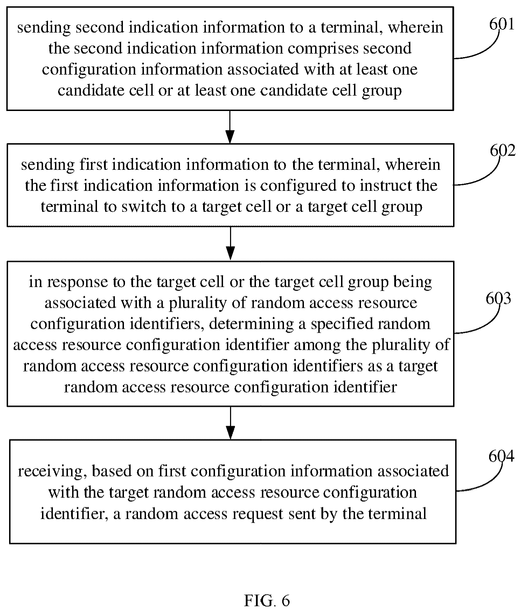

Referring to FIG. 6. FIG. 6 is a flow chart illustrating a method for random access according to an embodiment of the disclosure. As shown in FIG. 6, the method is performed by a network device and may include but is not limited to the following steps 601 to 604.

At step 601, second indication information is sent to a terminal, in which the second indication information includes second configuration information associated with at least one candidate cell or at least one candidate cell group.

In some possible implementations, the second indication information may be an RRC message.

In some possible implementations, the second configuration information includes at least one of: a number of steps in a random access procedure, or whether a random access resource is shared.

In some possible implementations, the number of steps in the random access procedure may be 2 or 4.

The terminal may classify the random access procedure into: a 4-step random access procedure or a 2-step random access procedure based on the number of steps.

In some possible implementations, based on "whether the random access resource is shared", the random access procedure may be classified into: a CBRA, or a CFRA.

In some possible implementations, whether the random access resource is shared is configured as a contention-free random access resource configuration identifier, and third configuration information associated with the contention-free random access resource configuration identifier includes at least one of: a time-frequency position of the random access resource, or a random access resource code.

In some possible implementations, the random access resource code is a random access preamble.

In some possible implementations, the second indication information further includes third indication information for indicating whether the first indication information carries the random access resource configuration identifier.

That is, an indication field for indicating whether the L1/L2 control signaling carries the random access resource configuration identifier is carried in the RRC message, so that the network device and the terminal may determine a format of the first indication information based on the third indication information. Then, when sending the first indication information, the network device may generate and send the first indication information based on the determined format. Correspondingly, the terminal may parse the first indication information based on the determined format.

At step 602, first indication information is sent to the terminal, in which the first indication information is configured to instruct the terminal to switch to a target cell or a target cell group.

At step 603, in response to the target cell or the target cell group being associated with a plurality of random access resource configuration identifiers, a specified random access resource configuration identifier among the plurality of random access resource configuration identifiers is determined as a target random access resource configuration identifier.

At step 604, based on first configuration information associated with the target random access resource configuration identifier, a random access request sent by the terminal is received.

For specific implementation forms of steps 602 to 604 reference may be made to the detailed descriptions in other embodiments of the disclosure, and details are not repeated here.

By implementing the embodiments of the disclosure, the network device first sends the second configuration information associated with candidate cells or candidate cell groups. After sending the first indication information instructing the terminal to access the target cell or the target cell group to the terminal, if the target cell or the target cell group is associated with the plurality of random access resource configuration identifiers, the network device may determine the specified random access resource configuration identifier as the target random access resource configuration identifier, and then receive the random access request sent by the terminal based on the first configuration information associated with the target random access resource configuration identifier. Thus, consistent understanding of using which random access resources for the cell or the cell group is ensured between the terminal and the network device, reliability of the random access procedure is improved, conditions are provided for the network device to configure random access resources more flexibly, and utilization efficiency of the random access resources is improved.

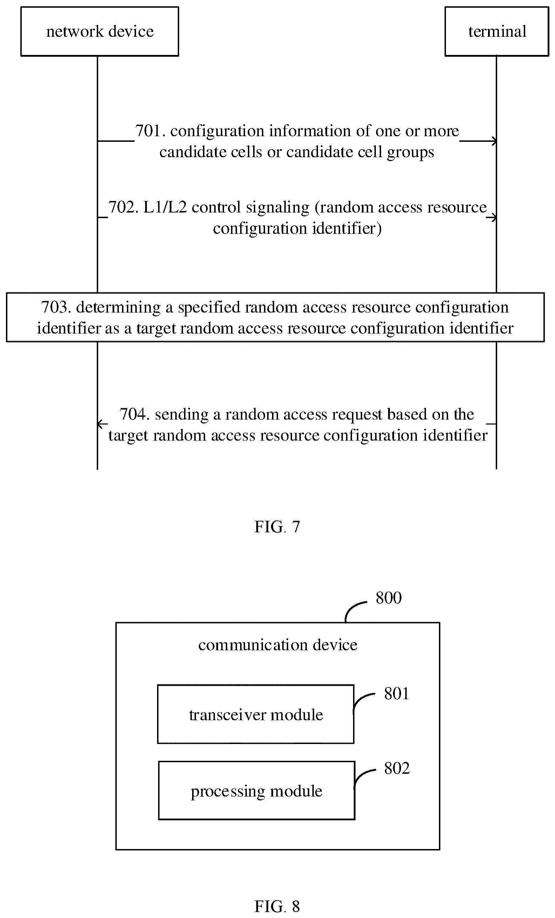

Referring to FIG. 7. FIG. 7 is an interaction diagram illustrating a method for random access according to an embodiment of the disclosure. As shown in FIG. 7, the method may include but is not limited to the following steps 701 to 704.

At step 701, a network device provides configuration information of one or more candidate cells or candidate cell groups to a terminal.

Optionally, the network device may provide the configuration information of the candidate cell or the candidate cell group to the terminal via a RRC reconfiguration message.

The configuration information of the candidate cell or the candidate cell group includes configuration information associated with a random access procedure.

The configuration information associated with the random access procedure includes at least one of: a number of steps in a random access procedure, or whether a random access resource is shared.

When whether the random access resource is shared is configured as a contention-free random access resource configuration identifier, configuration information associated with the contention-free random access resource configuration identifier includes at least one of: a time-frequency position of the random access resource (e.g., PRACH occasion), or a random access resource code (e.g., preamble).

Optionally, the network device may further indicate whether a subsequent L1/L2 control signaling carries a random access resource configuration identifier. For example, it may be indicated in the RRC message that, when the L1/L2 control signaling controls the terminal to switch among a plurality of candidate cells (or cell groups), the control signaling carries the random access resource configuration identifier.

At step 702, the network device sends a L1/L2 control signaling to the terminal to control the terminal to switch among a plurality of candidate cells or cell groups.

The L1/L2 control signaling may include a random access resource configuration identifier.

The random access resource configuration identifier indicated in the L1/L2 control signaling corresponds to a target cell (or cell group) indicated by the L1/L2 control signaling.

At step 703, the terminal and the network device determine a specified random access resource configuration identifier as a target random access resource configuration identifier.

Optionally, for the same target cell or the same target cell group, if both the RRC message and the L1/L2 control signaling carry the random access resource configuration identifier associated with the target cell or the target cell group, the terminal and network device determine that the terminal may initiate the random access procedure based on the random access resource configuration identifier in the L1/L2 control signaling.

For example, if the "random access resource configuration identifier" of the "candidate cell (or cell group)" in the RRC message indicates a contention-based random access resource, and the "random access resource configuration identifier" in the "L1/L2 control signaling" indicates a contention-free random access resource, the terminal may, based on the "random access resource configuration identifier" in the "L1/L2 control signaling", initiate the random access procedure in the target cell (or cell group) using the contention-free random access resource. That is, the use of the random access resource configuration identifier in the L1/L2 control signaling takes priority over the random access resource configuration identifier in RRC.

Alternatively, if the "random access resource configuration identifier" of the "candidate cell (or cell group)" in the RRC message indicates a contention-free random access resource, and the "random access resource configuration identifier" in the "L1/L2 control signaling" also indicates a contention-free random access resource, the terminal may, based on the "random access resource configuration identifier" in the "L1/L2 control signaling", initiate the random access procedure in the target cell (or cell group) using the contention-free random access resource.

Optionally, for the same target cell (or cell group), if both the RRC message and "L1/L2 control signaling" carry its "random access resource configuration", the terminal may initiate the random access procedure based on the most recently received random access resource configuration identifier. Correspondingly, the network device may receive the random access request sent by the terminal based on the most recently sent random access resource configuration identifier.

For example, at time point t1, the random access resource configuration identifier associated with the "candidate cell (or cell group)" in the RRC message received by the terminal indicates a contention-based random access resource. At time point t2 (t2 is after t1), the random access resource configuration identifier in the "L1/L2 control signaling" received by the terminal indicates a contention-free random access resource, then the terminal may, based on the random access resource configuration identifier in the "L1/L2 control signaling" at time point t2, initiate the random access procedure in the target cell (or cell group) using the contention-free random access resource. That is, the terminal uses the most recently indicated random access resource.

Alternatively, at time point t1, the random access resource configuration identifier for the "candidate cell (or cell group)" in the RRC message received by the terminal indicates a contention-based random access resource. At time point t2 (t2 is after t1), the random access resource configuration identifier in the L1/L2 control signaling received by the terminal indicates a contention-free random access resource. At time point t3, the L1/L2 control signaling received by the terminal does not indicate a random access resource configuration identifier. Then at time point t3, the terminal may, based on the random access resource configuration identifier in the L1/L2 control signaling received at time point t2, initiate the random access procedure in the target cell (or cell group) using the contention-free random access resource.

At step 704, the terminal sends a random access request to the target cell (or target cell group) based on configuration information associated with the target random access resource configuration identifier.

Further, for the random access resource configuration identifier indicated in the L1/L2 control signaling, after the random access procedure for the target cell (or cell group) indicated by the L1/L2 control signaling is completed, the terminal discards the random access resource configuration identifier indicated in the L1/L2 control signaling.

By implementing the embodiments of the disclosure, consistent understanding of using which random access resources to use for the cell or the cell group is ensured between the terminal and the network device, reliability of the random access procedure is improved, conditions are provided for the network device to configure random access resources more flexibly, and utilization efficiency of the random access resources is improved.

Referring to FIG. 8. FIG. 8 is a block diagram illustrating a communication device 800 according to an embodiment of the disclosure. The communication device 800 in FIG. 8 may include a transceiver module 801 and a processing module 802. The transceiver module may include a transmitting module and/or a receiving module, the transmitting module is for realizing a transmitting function, and the receiving module is for realizing a receiving function, and the transceiver module may realize the transmitting function and/or the receiving function.

The communication device 800 may be a terminal, a device in the terminal, or a device that may be used in conjunction with the terminal.

When the communication device 800 is configured in a terminal side, the transceiver module 801 is configured to receive first indication information sent by a first network device, in which the first indication information is configured to instruct the terminal to switch to a target cell or a target cell group. The processing module 802 is configured to, in response to the target cell or the target cell group being associated with a plurality of random access resource configuration identifiers, determining a specified random access resource configuration identifier among the plurality of random access resource configuration identifiers as a target random access resource configuration identifier.

The transceiver module 801 is further configured to send, based on first configuration information associated with the target random access resource configuration identifier, a random access request to the target cell or the target cell group.

In some possible implementations, the processing module 802 is further configured to determine a first random access resource configuration identifier included in the first indication information as the target random access resource configuration identifier; or determine a random access resource configuration identifier with a minimum time interval between a reception time point and a current time point as the target random access resource configuration identifier.

In some possible implementations, the transceiver module 801 is further configured to receive second indication information sent by the first network device, in which the second indication information includes second configuration information associated with at least one candidate cell or at least one candidate cell group.

The second configuration information includes at least one of: a number of steps in a random access procedure, or whether a random access resource is shared.

In some possible implementations, whether the random access resource is shared is configured as a contention-free random access resource configuration identifier, and third configuration information associated with the contention-free random access resource configuration identifier includes at least one of: a time-frequency position of the random access resource, or a random access resource code.

In some possible implementations, the second indication information further includes third indication information for indicating whether the first indication information carries the random access resource configuration identifier.

In some possible implementations, the processing module 802 is further configured to determine a format of the first indication information based on the third indication information.

In some possible implementations, the processing module 802 is further configured to discard a first random access resource configuration identifier included in the first indication information after accessing the target cell or the target cell group.

The communication device 800 provided in the above embodiments of the disclosure achieves the same or similar beneficial effects as the method for random access provided in some of the above embodiments, which will not be repeated here.

The communication device 800 may be a network device, a device in the network device, or a device that may be used in conjunction with the network device.

When the communication device 800 is configured in a network device side, the transceiver module 801 is configured to send first indication information to a terminal, in which the first indication information is configured to instruct the terminal to switch to a target cell or a target cell group; and the processing module 802 is configured to, in response to the target cell or the target cell group being associated with a plurality of random access resource configuration identifiers, determining a specified random access resource configuration identifier among the plurality of random access resource configuration identifiers as a target random access resource configuration identifier.

The transceiver module 801 is further configured to receive, based on first configuration information associated with the target random access resource configuration identifier, a random access request sent by the terminal.

In some possible implementations, the processing module 802 is further configured to determine a first random access resource configuration identifier included in the first indication information as the target random access resource configuration identifier; or determine a random access resource configuration identifier with a minimum time interval between a sending time point and a current time point as the target random access resource configuration identifier.

In some possible implementations, the transceiver module 801 is further configured to send second indication information to the terminal, in which the second indication information includes second configuration information associated with at least one candidate cell or at least one candidate cell group. The second configuration information includes at least one of: a number of steps in a random access procedure, or whether a random access resource is shared.

In some possible implementations, whether the random access resource is shared is configured as a contention-free random access resource configuration identifier, and third configuration information associated with the contention-free random access resource configuration identifier includes at least one of: a time-frequency position of the random access resource, or a random access resource code.

In some possible implementations, the second indication information further includes third indication information for indicating whether the first indication information carries a random access resource configuration identifier.

In some possible implementations, the processing module 802 is further configured to determine a format of the first indication information based on the third indication information.

The communication device 800 provided in the above embodiments of the disclosure achieves the same or similar beneficial effects as the method for random access provided in some of the above embodiments, which will not be repeated here.

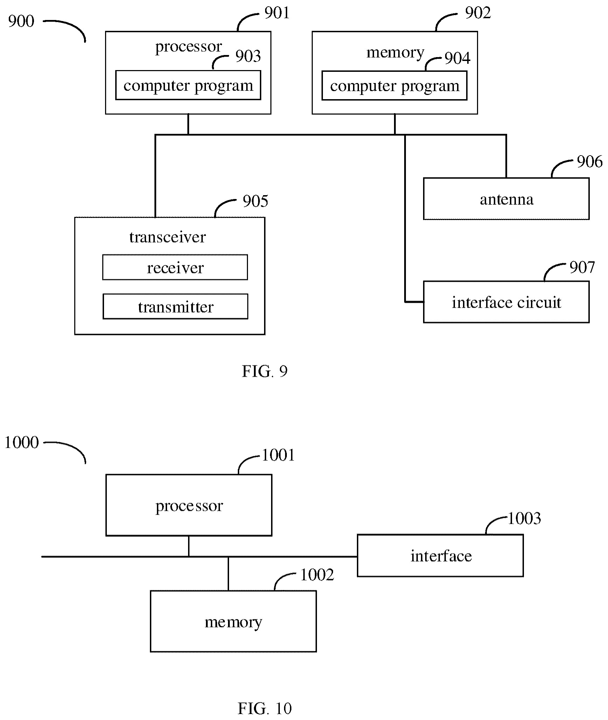

Referring to FIG. 9. FIG. 9 is a block diagram illustrating a communication device 900 according to an embodiment of the disclosure. The communication device 900 may be a source terminal, a relay terminal, or a target terminal; or may be a chip, a system on chip or a processor that supports the source terminal to implement the method; or may be a chip, a system on chip or a processor that supports the relay terminal to implement the method; or may be a chip, a system on chip or a processor that supports the target terminal to implement the method. The communication device 900 may be configured to implement the method described in the method embodiments, and reference may be made to the descriptions in the method embodiments.

The communication device 900 may include one or more processors 901. The processor 901 may include a general purpose processor or a dedicated processor. For example, the processor may be a baseband processor or a central processor. The baseband processor may be configured to process a communication protocol and communication data, and the central processor may be configured to control a communication device (e.g., a network device, a baseband chip, a UE, a UE chip, a DU or CU, etc.), to execute a computer program, and process data of the computer program.

Optionally, the communication device 900 may further include one or more memories 902 with a computer program 904 stored. The memory 902 executes the computer program 904 so that the communication device 900 performs the method as described in the above method embodiments. In some possible implementations, the memory 902 may further store data. The communication device 900 and the memory 902 may be independently configured or integrated together.

Optionally, the communication device 900 may further include a transceiver 905 and an antenna 906. The transceiver 905 may be referred to as a transceiving unit, a transceiver machine or a transceiving circuit, which may be configured to achieve a transceiving function. The transceiver 905 may include a receiver and a transmitter. The receiver may be referred to as a receiver machine or a receiving circuit, etc., for implementing a receiving function; the transmitter may be referred to as a transmitter machine or a transmitting circuit, etc. for implementing a transmitting function.

Optionally, the communication device 900 may further include one or more interface circuits 907. The interface circuit 907 is configured to receive code instructions and transmit the code instructions to the processor 901. The processor 901 runs the code instructions so that the communication device 900 performs the method according to the above method embodiment.

When the communication device 900 is a terminal, the transceiver 905 is configured to perform step 201 and step 203 in FIG. 2, and so on.

When the communication device 900 is a network device, the transceiver 905 is configured to perform step 501 and step 503 in FIG. 5, and so on.

In an implementation, the processor 901 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 901 may be stored with a computer program 903. The computer program 903 is running on the processor 901 so that the communication device 900 performs the method as described in the above method embodiments. The computer program 903 may be solidified in the processor 901, in which case the processor 901 may be implemented by hardware.

In an implementation, the communication device 900 may include a circuit that may implement a transmitting, receiving, or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a terminal, but the scope of the communication device described in the disclosure is not limited, and a structure of the communication device may not be limited by FIG. 9. The communication device may be a stand-alone device or may be a part of a larger device. For example, the communication device may be the following:
(1) a stand-alone integrated circuit (IC), or a chip, or a system on chip or a subsystem;
(2) a set of one or more ICs, in a possible implementation, which may also include a storage component for storing data and a computer program;
(3) an ASIC, such as a Modem;
(4) a module that may be embedded within other devices;
(5) a receiver, a terminal, a smart terminal, a cellular phone, a wireless device, a handset, a mobile unit, a vehicle device, a network device, a cloud device, an artificial intelligence device, etc.;
(6) others.

In the case that the communication device may be a chip or a system on chip, reference may be made to FIG. 10. FIG. 10 is a block diagram illustrating a chip according to an embodiment of the disclosure.

The chip 100 includes a processor 1001 and an interface 1003. The number of processors 1001 may be one or more, and the number of interfaces 1003 may be more than one.

For the case where the chip is configured to implement functions of the terminal in embodiments of the disclosure, the interface 1003 is configured to receive code instructions and transmit the code instructions to the processor, and the processor 1001 is configured to execute the code instructions to perform the method for random access according to some of the foregoing embodiments.

For the case where the chip is configured to implement functions of the network device in embodiments of the disclosure, the interface 1003 is configured to receive code instructions and transmit the code instructions to the processor, and the processor 1001 is configured to execute the code instructions to perform the method for random access according to some of the foregoing embodiments.

In some possible implementations, the chip 1000 further includes a memory 1002, the memory 1002 being configured to store necessary computer programs and data.

Those skilled in the related art may understand that various illustrative logical blocks and steps listed in embodiments of the disclosure, may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

Embodiments of the disclosure further provide a communication system. The system includes the communication device as the terminal and the communication device as the network device in the embodiments in FIG. 8, or the system includes the communication device as the terminal and the communication device as the network device in the embodiments in FIG. 9.

A readable storage medium with instructions stored thereon is further provided in the disclosure. When the instructions are executed by a computer, steps in any one of the method embodiments are implemented.

A computer program product is further provided in the disclosure. The computer program product implements functions of any one of the above method embodiments when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable devices. The computer program may be stored in a computer-readable storage medium or transmitted from one computer-readable storage medium to another. For example, the computer program may be transmitted from one website, computer, server, or data center to another via wired (such as a coaxial cable, a fiber optic, a digital subscriber line (DSL)) or wireless (such as infrared, radio, microwave) means. The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are for distinguishing merely for convenience of description, and are not intended to limit the scope of embodiments of the disclosure, but also to indicate an order of precedence.

The term "at least one" in the disclosure may also be described as one or more, and the phase "a plurality of" may refer to two, three, four or more. The term "and/or" describes an association relationship of associated objects, indicating that there may be three types of relationships. For example, A and/or B may indicate: A exists alone, A and B exist simultaneously, or B exists alone, where A and B may be singular or plural. The character "/" generally indicates that the associated objects before and after are in an "or" relationship. The term "at least one" or similar expressions refer to any combination of these items, including a single item or a combination of a plurality of items. For example, at least one of a, b, and c may represent: a alone, b alone, c alone, a and b, a and c, b and c, or a, b and c, in which a, b, and c may be single or plural, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

The term "predefined" in the disclosure may be understood as defined, defined in advance, stored, pre-stored, pre-negotiated, pre-configured, solidified or pre-fired.

Those skilled in the related art may realize that units and algorithm steps of the examples described in embodiments of the disclosure may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the disclosure.

Those skilled in the art may clearly understand that for a specific working process of a system, a device and a unit described above reference may be made to a corresponding process in the above method embodiments, and details will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for random access, performed by a terminal, comprising:
receiving first indication information sent by a first network device, wherein the first indication information is configured to instruct the terminal to switch to a target cell or a target cell group;
in response to the target cell or the target cell group being associated with a plurality of random access resource configuration identifiers, determining a specified random access resource configuration identifier among the plurality of random access resource configuration identifiers as a target random access resource configuration identifier; and
sending, based on first configuration information associated with the target random access resource configuration identifier, a random access request to the target cell or the target cell group.

2. The method according to claim 1, wherein determining the specified random access resource configuration identifier among the plurality of random access resource configuration identifiers as the target random access resource configuration identifier comprises:
determining a first random access resource configuration identifier comprised in the first indication information as the target random access resource configuration identifier; or
determining a random access resource configuration identifier with a minimum time interval between a reception time point and a current time point as the target random access resource configuration identifier.

3. The method according to claim 1, further comprising:
receiving second indication information sent by the first network device, wherein the second indication information comprises second configuration information associated with at least one candidate cell or at least one candidate cell group;
wherein the second configuration information comprises at least one of: a number of steps in a random access procedure, or whether a random access resource is shared.

4. The method according to claim 3, wherein whether the random access resource is shared is configured as a contention-free random access resource configuration identifier, and third configuration information associated with the contention-free random access resource configuration identifier comprises at least one of:
a time-frequency position of the random access resource, or
a random access resource code.

5. The method according to claim 3, wherein the second indication information further comprises third indication information for indicating whether the first indication information carries the random access resource configuration identifier.

6. The method according to claim 5, further comprising:
determining a format of the first indication information based on the third indication information.

7. The method according to any one of claims 1 to 6, further comprising:
discarding a first random access resource configuration identifier comprised in the first indication information after accessing the target cell or the target cell group.

8. A method for random access, performed by a network device, comprising:
sending first indication information to a terminal, wherein the first indication information is configured to instruct the terminal to switch to a target cell or a target cell group;
in response to the target cell or the target cell group being associated with a plurality of random access resource configuration identifiers, determining a specified random access resource configuration identifier among the plurality of random access resource configuration identifiers as a target random access resource configuration identifier; and
receiving, based on first configuration information associated with the target random access resource configuration identifier, a random access request sent by the terminal.

9. The method according to claim 8, wherein determining the specified random access resource configuration identifier among the plurality of random access resource configuration identifiers as the target random access resource configuration identifier comprises:
determining a first random access resource configuration identifier comprised in the first indication information as the target random access resource configuration identifier; or
determining a random access resource configuration identifier with a minimum time interval between a sending time point and a current time point as the target random access resource configuration identifier.

10. The method according to claim 8, further comprising:
sending second indication information to the terminal, wherein the second indication information comprises second configuration information associated with at least one candidate cell or at least one candidate cell group;
wherein the second configuration information comprises at least one of: a number of steps in a random access procedure, or whether a random access resource is shared.

11. The method according to claim 10, wherein whether the random access resource is shared is configured as a contention-free random access resource configuration identifier, and third configuration information associated with the contention-free random access resource configuration identifier comprises at least one of:
a time-frequency position of the random access resource, or
a random access resource code.

12. The method according to claim 10, wherein the second indication information further comprises third indication information for indicating whether the first indication information carries a random access resource configuration identifier.

13. The method according to claim 12, further comprising:
determining a format of the first indication information based on the third indication information.

14. A communication device, comprising:
a transceiver module, configured to receive first indication information sent by a first network device, wherein the first indication information is configured to instruct a terminal to switch to a target cell or a target cell group; and
a processing module, configured to, in response to the target cell or the target cell group being associated with a plurality of random access resource configuration identifiers, determine a specified random access resource configuration identifier among the plurality of random access resource configuration identifiers as a target random access resource configuration identifier;
wherein the transceiver module is further configured to send, based on first configuration information associated with the target random access resource configuration identifier, a random access request to the target cell or the target cell group.

15. A communication device, comprising:
a transceiver module, configured to send first indication information to a terminal, wherein the first indication information is configured to instruct the terminal to switch to a target cell or a target cell group; and
a processing module, configured to, in response to the target cell or the target cell group being associated with a plurality of random access resource configuration identifiers, determining a specified random access resource configuration identifier among the plurality of random access resource configuration identifiers as a target random access resource configuration identifier;
wherein the transceiver module is further configured to receive, based on first configuration information associated with the target random access resource configuration identifier, a random access request sent by the terminal.

16. A communication device, comprising a processor and a memory, wherein the memory stores a computer program, which, when executed by the processor, causes the device to implement the method according to any one of claims 1 to 7, or implement the method according to any one of claims 8 to 13.

17. A communication device, comprising: a processor and an interface circuit; wherein
the interface circuit is configured to receive code instructions and transmit the code instructions to the processor; and
the processor is configured to execute the code instructions to implement the method according to any one of claims 1 to 7, or implement the method according to any one of claims 8 to 13.

18. A communication system, comprising a terminal and a network device;
wherein the terminal device is configured to perform the method according to any one of claims 1 to 7, and the network device is configured to perform the method according to any one of claims 8 to 13.

19. A computer-readable storage medium, configured to store instructions, wherein when the instructions are executed, the method according to any one of claims 1 to 7 or the method according to any one of claims 8 to 13 is implemented.
